# EUROPÄISCHE PATENTSCHRIFT

(11) **EP 3 206 937 B1**
(45) Veröffentlichungstag und Bekanntmachung des Hinweises auf die Patenterteilung: **07.11.2018**
(21) Anmeldenummer: 15777700.4
(22) Anmeldetag: 09.10.2015
(51) Int. Cl.: B62D 21/11, B62D 29/00

(54) **ACHSTRÄGER EINES KRAFTFAHRZEUGS**
AXLE SUPPORT OF A MOTOR VEHICLE
SUPPORT D'ESSIEU D'UN VÉHICULE AUTOMOBILE

(30) Priorität: 16.10.2014 DE 102014221079
(43) Veröffentlichungstag der Anmeldung: 23.08.2017
(73) Patentinhaber: Bayerische Motoren Werke Aktiengesellschaft, 80809 München (DE)
(72) Erfinder: TENHAEFF, Katja, 81373 München (DE); KELLER, David, 80638 München (DE); KEIGLER, Michael, 80807 München (DE)
(86) Internationale Anmeldenummer: PCT/EP2015/073415
(87) Internationale Veröffentlichungsnummer: WO 2016/058941

(56) Entgegenhaltungen:
- EP-A1- 2 399 727
- WO-A1-2014/029539
- DE-A1-102011 113 662
- US-A1- 2012 280 534
- US-B1- 6 408 515

## Beschreibung

Die Erfindung betrifft einen Achsträger nach den Oberbegriffen der nebengeordneten unabhängigen Ansprüche 1, 2 und 3 sowie ein Verfahren zur Herstellung eines erfindungsgemäßen Achsträgers. Zum Stand der Technik wird auf die zur Bildung des Oberbegriffs des Anspruchs 1 herangezogene US 6 408 515 B1 bzw. auf die DE 10 2011 113 662 A1 und weiterhin beispielshalber auf die WO 2014/029539 A1 verwiesen.

Achsträger von Kraftfahrzeugen, bspw. Personenkraftwagen umfassen üblicherweise zwei Längsträger und einen oder zwei die Längsträger verbindende Querträger. Die Achsträger sind unterhalb der Fzg.-Karosserie an dieser befestigt und dienen zum Anbinden der Radaufhängung. Üblicherweise werden die gleichen Achsträger für unterschiedliche Derivate einer Fahrzeug-Baureihe verwendet, welche Derivate bei hauptsächlich relevanten geometrisch gleichen Abmessungen unterschiedliche Motorisierungen oder Gewichte aufweisen. Bei den verschiedenen Derivaten handelt es sich somit um unterschiedliche Kraftfahrzeug-Typen, die sich hinsichtlich ihrer Antriebsleistung und/oder hinsichtlich ihres Gewichts voneinander unterscheiden, aber hinsichtlich der geometrischen Abmessungen zumindest des Achsträgers gleich sind.

Bislang ist es erforderlich, den gleichen Achsträger für die besagten unterschiedlichen Kraftfahrzeug-Typen im Hinblick auf die maximal auftretenden Belastungen oder Lasten auszulegen und zu dimensionieren. Der Begriff "Dimensionierung" beschreibt dabei wie im Ingenieurwesen üblich die Festlegung von Abmessungen, Formgebung und Materialeigenschaften aufgrund objektiver Kriterien im Rahmen der Auslegung des jeweiligen Bauteils. Ausgangspunkt des Bemessungsvorgangs sind dabei die Anforderungen, die an das Bauteil gestellt werden und Ziel der Bemessung ist es, die notwendige und optimale Größe und Belastbarkeit eines Bauteils festzustellen. Dass aufgrund der Tatsache, dass ein für verschiedene Kraftfahrzeug-Typen vorgesehener Achsträger auf die maximal mögliche Belastung hin ausgelegt wird, dieser Achsträger für einen Kraftfahrzeug-Typ, bei welchem nur eine geringere maximale Belastung auftreten kann, überdimensioniert ist, liegt auf der Hand. Eine solche Überdimensionierung ist aber aus Gewichts- und Kostengründen unerwünscht. Bei ansonsten im Wesentlichen baugleichen Kraftfahrzeug-Typen ist die Höhe oder Größe der maximalen Belastung insbesondere vom Fahrzeug-Gewicht und von der Antriebsleistung des Fahrzeug-Antriebsaggregats abhängig.

Eine Abhilfe für die vorstehend geschilderte Problematik aufzuzeigen ist Aufgabe der vorliegenden Erfindung. Die Lösung dieser Aufgabe ergibt sich mit den Merkmalen des unabhängigen zweiten oder dritten Patentanspruchs. Der nebengeordnete unabhängige erste Patentanspruch stellt eine Verallgemeinerung des erfindungsgemäßen Prinzips auf bzw. für einen metallischen Achsträger dar. Es wurde nämlich erkannt, dass bei Achsträgern, die vorzugsweise aus Leichtmetall-Legierungen bestehen bzw. aus Leichtmetall-Trägern zusammengesetzt sind, die Verbindungsstellen zwischen den Trägern die wesentlichen Schwachstellen darstellen, weshalb im bislang üblichen Stand der Technik die einzelnen Träger als solche praktisch überdimensioniert werden, nur um die besagten Verbindungsstellen ausreichend fest gestalten zu können. Letzteres ist mit den Merkmalen des Anspruchs 1 vermeidbar. Die abhängigen und auf die nebengeordneten Ansprüche 1, 2, 3 rückbezogenen Ansprüche haben vorteilhafte Ausgestaltungen der Erfindung zum Gegenstand.

Vorgeschlagen wird somit grundsätzlich, einen Kraftfahrzeug-Achsträger an den Verbindungsstellen zwischen den Längsträgern des Achsträgers und dem (bzw. den ggf. mehrfach vorgesehenen) Querträger(n) zu verstärken, indem diese Verbindungsstellen (ggf. auch in deren direkter Umgebung, wenn die eigentliche Verbindungsstelle relativ schmal und bspw. durch eine Schweißnaht gebildet ist) mit faserverstärktem Kunststoff umwickelt werden. Dieses umwickelte faserverstärkte Kunststoffmaterial bildet dann ein Verstärkungselement des Achsträgers. Grundsätzlich ist eine solche Verstärkungsmaßnahme nicht nur an metallischen Achsträgern, sondern auch an solchen, deren Längs- und Querträger ihrerseits aus faserverstärktem Kunststoff bestehen möglich; an letzteren kann eine solche Maßnahme dann , wenn diese an jedem gefertigten Achsträger umgesetzt werden sollte, aber auch einfacher durch geeignete Gestaltung der jeweiligen Träger erzielt werden. Grundsätzlich ermöglicht ein erfindungsgemäßes Verstärkungselement eine erhöhte Lebensdauer eines Achsträgers, da mechanische Spannungen im Grundmaterial dadurch abgebaut und jedenfalls an einem metallischen Achsträger die dort zwischen Längsträgern und Querträgern vorgesehenen Schweißnähte entlastet werden. Auch ist mit solchen Verstärkungselementen eine Verbesserung der akustischen Eigenschaften und eine Erhöhung der Schwingungsdämpfung erzielbar.

Nun auf die eingangs geschilderte Problematik eingehend wird weiterhin (gemäß den nebengeordneten Ansprüchen 2, 3) ein für verschiedene Kraftfahrzeug-Typen vorgesehener (und dabei gleiche geometrische Abmessungen aufweisender) Achsträger, umfassend zwei Längsträger und zumindest einen die beiden Längsträger verbindenden Querträger, vorgeschlagen. Der Achsträger ist zur Befestigung an einer Karosserie des Fahrzeugs ausgebildet. Am Achsträger wiederum kann (analog für denjenigen des Anspruchs 1) die Radaufhängung befestigt werden. Die Längsträger sind an Verbindungsstellen mit dem zumindest einen Querträger verbunden. Bei Verwendung für bzw. in einen gewissen Kraftfahrzeug-Typ, der sich durch relativ hohes Gewicht und/oder eine relativ hohe Antriebsleistung (des Fzg.-Antriebsaggregats) auszeichnet, ist zumindest eine der besagten Verbindungsstellen (und es sind vorzugsweise sämtliche besagten Verbindungsstellen) mit einem Verstärkungselement versehen, welches durch Umwickeln dieser Verbindungsstelle mit faserverstärktem Kunststoff gebildet ist. Dabei kommt insbesondere ein faserverstärktes Band (Tape) sowie eine Kunststoffmatrix zum Einsatz. Es wurde erkannt, dass eine quasi günstige Schwachstelle des Achsträgers, welche für dessen Verwendung in unterschiedlichen Kraftfahrzeug-Typen unterschiedlich stark dimensioniert ausgelegt werden kann, der Verbindungsbereich zwischen den Längsträgern und dem/den Querträgern(n) ist. Somit ist es nicht erforderlich, diesen Verbindungsbereich für dasjenige Fahrzeug-Derivat bzw. denjenigen Fzg.-Typ, welches/welcher die höchsten Festigkeits- bzw. Betriebsfestigkeitsanforderungen an den Achsträger stellt, auszulegen. Vielmehr kann insbesondere der Verbindungsbereich des unter Verwendung sonst gleicher Bauelemente (nämlich Längsträger und Querträger) aufgebauten Achsträgers typ-individuell gestaltet sein. Dies ist besonders einfach und effizient durch Umwickeln oder Nicht-Umwickeln oder unterschiedliches Umwickeln (insbesondere hinsichtlich Dicke bzw. Höhe und/oder Breite) des besagten Verbindungsbereichs mit Faserverbundmaterial (d.h. faserverstärktem Kunststoff) möglich, wodurch auf einfache Weise und lokal auf wesentlichen Schwachstellen begrenzt (und somit nicht den gesamten Achsträger bzw. dessen vollständige Längsträger und Querträger umfassend) ein bzw. mehrere Verstärkungselemente entsprechend den jeweiligen individuellen Anforderungen gebildet werden können. Durch Umwickeln der Verbindungsstellen mit einem faserverstärktem Band bzw. Kunststoffmaterial und somit durch das Ausbilden eines Verstärkungselements kann ein für höhere Belastungen auszulegender Achsträger gegenüber einem ansonsten geometrisch gleichen Achsträger, der lediglich geringere Maximal-Lasten aufnehmen muss, verstärkt werden und somit für Fahrzeug-Typen mit höherer Anforderung eingesetzt werden.

Ein erfindungsgemäßes (und für die Achsträger der Ansprüche 1, 2, 3 geeignetes) Verstärkungselement bzw. der umwickelte faserverstärkte Kunststoff kann durch thermisches Fügen mit der Verbindungsstelle von Querträger und Längsträger und somit auch entsprechend - abhängig davon, wie die Verbindungsstelle gestaltet ist - mit dem Querträger und/oder Längsträger verbunden sein. Für dieses thermische Fügen wird insbesondere die Kunststoff-Matrix des Verstärkungselements verwendet. Ein solches thermisches Fügen stellt dann, wenn das Grundmaterial des Achsträgers bzw. der Verbindungsstelle selbst ein thermoplastischer Kunststoff ist, eine stoffschlüssige Verbindung her. Besteht hingegen der Achsträger bzw. die besagte Verbindungsstelle aus einem metallischen Werkstoff (= "Grundmaterial des Achsträgers), so kann das bekannte Aufschweißen von Kunststoffmaterial auf einem Metallwerkstoff praktiziert werden, d.h. hierbei erfolgt das grundsätzliche bekannte thermische Direktfügen einer Kunststoff-Metall-Werkstoffpaarung.

Im Rahmen des thermischen Fügens zwischen Kunststoff und Metall, d.h. beim Aufschweißen bspw. einer Kunststoff-Matrix, welche Verstärkungsfasern enthält (und somit den das erfindungsgemäße Verstärkungselement bildenden faserverstärkten Kunststoff darstellt) wird quasi ein Mikroformschluss oder Formschluss im Nanobereich zwischen dem Kunststoff-Material und der Oberfläche des metallischen Bauteils hergestellt. Bei letzterem handelt es sich nun um die besagte Verbindungsstelle, welche vorzugsweise durch Abschnitte von Längsträger und Querträger gebildet ist, so dass das erfindungsgemäße Verstärkungselement durch thermisches Fügen mit dem Grundmaterial des Achsträgers verbunden ist. Für dieses auch sog. Aufschweißen eines Kunststoff-Materials kann eine geeignete Oberflächen-Vorbehandlung des metallischen Grundkörpers, welche gemeinhin auch als Beizen bezeichnet wird, notwendig sein, ebenso wie ggf. das Vorsehen einer Haftvermittlerschicht oder einer Klebstoffschicht. Solche Schichten bieten vorteilhafterweise auch einen Schutz gegen Kontaktkorrosion beispielsweise zwischen Kohlenstoff-Verstärkungsfasern, welche in der Kunststoff-Matrix eingebettet sind, und einer Leichtmetalllegierung (des Achsträgers). Für das genannte Beizen kann nach einem Reinigungsprozess ein Strukturieren der Metall-Oberfläche im Nano- oder Mikrobereich durchgeführt werden, um beim Verschweißen mit der Kunststoff-Matrix des Verstärkungselements den gewünschten Mikroformschluss bilden zu können. Möglich ist auch eine Plasmavorbehandlung des betroffenen metallischen Bauteil-Abschnitts. Für einen Achsträger hingegen, dessen Längsträger und Querträger ihrerseits aus faserverstärktem Kunststoff bestehen, ist eine stoffschlüssige Verbindung mit einem erfindungsgemäßen Verstärkungselement auf bekannte Weise einfach darstellbar.

Alternativ oder zusätzlich zur stoffschlüssigen Verbindung ist ein (anders als der vorstehend genannte Mikroformschluss) mit bloßem Auge sichtbarer Formschluss des Verstärkungselements mit der Verbindungsstelle, welche entweder durch ein eigenständiges Bauteil oder vorzugsweise durch einen Längsträger und einen Querträger selbst gebildet sein kann, möglich. Ein solcher sichtbarer Formschluss mit der sog. "Grundstruktur" des Achsträgers bzw. von dessen besagter Verbindungsstelle kann beispielsweise auch durch Vorsehen von Strukturierungen (= Erhebungen oder Vertiefungen) oder durch Pins oder Stifte oder ähnliches im jeweiligen zu verstärkenden Grundbauteil - hierbei handelt es sich vorzugsweise um den Längsträger bzw. den Querträger, alternativ um irgendein geeignet gestaltetes Verbindungsglied - gebildet sein.

Vorzugsweise ist das Verstärkungselement durch ein Band, welches eine Vielzahl von Verstärkungsfasern enthält, gebildet, und weist vorteilhafterweise unidirektionale Verstärkungsfasern auf, die durch entsprechendes Wickeln des Bandes kreuzweise um die Verbindungsstelle gewickelt sein können. An der Verbindungsstelle treffen üblicherweise der Längsträger und der Querträger annähernd in einem 90°-Winkel aufeinander. Die Verbindungsstelle zwischen diesen beiden Trägern wird dann vorteilhafterweise kreuzweise mit dem besagten Band umwickelt, sodass sich die Verstärkungsfasern des unidirektionalen Bandes mehrfach kreuzen. Bezogen auf die Längsachse des Querträgers können die Verstärkungsfasern mit dieser abwechselnd, nämlich übereinander liegend gewickelt, beispielsweise einen Winkel in der Größenordnung von 15° und 165° einschließen. Beispielsweise kann die (übereinander liegende) Schichtungsreihenfolge derart gestaltet sein, dass zunächst alle Verstärkungsfasern in einer ersten Richtung (bspw. unter 15°) und danach dann alle Verstärkungsfasern in einer zweiten Richtung (bspw. unter 165°) gewickelt sind; alternativ ist auch eine abwechselnd geänderte Faserorientierung (bspw. 25°, 155°, 15°, 165°, usw.) zur Bildung eines Geflechts möglich. Selbstverständlich sind auch stückweise zusammengesetzte oder nur partielle Umwicklungen möglich und es liegt eine bevorzugte Dicke des durch gewickelte Verstärkungsfasern mit Kunststoffmatrix gebildeten Verstärkungselements in der Größenordnung von 0,3 Millimeter bis 5 mm. Im Falle eines mehrfach umwickelten Bandes, welches selbst beispielsweise eine Dicke im Bereich von 0,1 mm bis 0,3 mm besitzen kann, können somit zwischen 2 und ca. 15 übereinander gewickelte Lagen dieses Bandes vorgesehen sein.

Was die wesentlichen Bauelemente des Achsträgers, nämlich die Längsträger und den zumindest einen (bzw. die) Querträger betrifft, so können diese - wie in Anspruch 1 obligatorisch angegeben - aus einem Metall, wie Stahl oder einer Leichtmetalllegierung, oder im Rahmen einer Ausbildung nach den nebengeordneten unabhängigen Ansprüchen 2, 3 ihrerseits alternativ auch aus faserverstärktem Kunststoff bestehen. Diese Träger können aber auch eine Hybridbauweise besitzen, so dass sie bspw. nur in der Umgebung des besagten Verbindungsbereichs aus einem der vorstehend genannten Materialien bestehen und in anderen Bereichen aus einem anderen (beliebigen) Material. Und was die Verbindung zwischen einem Längsträger und Querträger betrifft, so kann diese stoffschlüssig oder formschlüssig oder kraftschlüssig sein. Die Träger können hierfür miteinander verschweißt oder verschraubt sein und/oder derart ausgebildet sein dass bspw. der Querträger mit seinen geeignet geformten Endabschnitten jeweils in eine angepasst geformte Aufnahme des Längsträges eingesteckt ist.

Was die Verstärkungsfasern des das erfindungsgemäße Verstärkungselement bildenden faserverstärkten Kunststoffs betrifft, so können dies vorzugsweise Kohlefasern oder Glasfasern oder Aramidfasern oder auch Naturfasern sein. Dabei ist auch eine Kombination aus verschiedenen Faserverbundkunststoff-Halbzeugen möglich. Weiterhin ist es möglich, bspw. zwischen Schichten von faserverstärktem Kunststoff geeignete Zwischenschichten oder allgemein irgendwelche Zusatzschichten aus unverstärktem, d.h. nicht durch Fasern verstärktem Material vorzusehen, bei welchem Material es sich bspw. um ein viskoelastisches Material handeln kann. Solche Zusatzschichten können bspw. zwischen dem (metallischen) Grundkörper des Achsträgers und der ersten aufgebrachten Faserverbundkunststoff-Schicht (= FVK-Schicht) vorgesehen sein und/oder zwischen den einzelnen FVK-Schichten oder an der Oberfläche des Verstärkungselementes. Im letztgenannten Fall kann eine solche Zusatzschicht insbesondere als Schutz gegen äußere Einwirkungen, bspw. Steinschlag, dienen, während in den anderen Fällen neben einer weiter oben bereits genannten Vermeidung von Kontaktkorrosion, d.h. zur Erzielung einer galvanischen Trennung auch eine Verbesserung der Haftung zwischen verschiedenen Schichten oder Materialen erzielt werden kann. Auch kann eine solche insbesondere elastische Zusatz- oder Zwischenschicht dem Ausgleich unterschiedlicher Wärmeausdehnungen verschiedenere Materialien dienen und eine Dämpfung insbesondere hinsichtlich des akustischen Verhaltens eines erfindungsgemäßen Achsträgers bewirken, aber auch mechanische Schwingungen bedämpfen.

Der Achsträger umfasst wie üblich Radanbindungspunkte zum Befestigen von radanbindenden Bauteilen wie beispielsweise Radträger, Schwenklager, Längslenker, Querlenker oder Zugstreben. Des weiteren sind am Achsträger Karosserieanbindungspunkte vorgesehen. Über diese Karosserieanbindungspunkte wird der Achsträger mit der Karosserie des Fahrzeugs verbunden. Des weiteren können, insbesondere am Querträger, Lagerstellen ausgebildet sein. Über diese Lagerstellen kann ein Motor oder ein Getriebe im Achsträger befestigt werden.

Die Erfindung umfasst ferner ein Verfahren zur Herstellung des beschriebenen Achsträgers. Dabei erfolgt ein Formen des Verstärkungselements an der Verbindungsstelle durch Umwickeln der Verbindungsstelle mit einem faserverstärktem Band. Für die Ausbildung der Kunststoff-Matrix sind verschiedene Varianten möglich: Gemäß einer ersten Variante wird eine duroplastische Matrix verwendet. Das Band wird dabei mit der nassen duroplastischen Matrix gewickelt und anschließend ausgehärtet. Alternativ dazu ist es möglich, ein vorimprägniertes Band zu benutzen. Das Band ist dabei mit einer thermoplastischen Matrix vorimprägniert. Anstatt des vorimprägnierten Bandes können auch Hybridgarne verwendet werden. Solche Hybridgarne umfassen die Verstärkungsfasern mit integriertem thermoplastischen Kunststoff. Bei der thermoplastischen Matrix wird das Band bzw. die Matrix vor und/oder während und/oder nach dem Wickeln erwärmt. Sowohl die duroplastische als auch die thermoplastische Matrix verbindet im ausgehärteten Zustand nicht nur die einzelnen Verstärkungsfasern untereinander, sondern kann im Falle eines direkten Kontakts auch einen Stoffschluss oder eine Quasi-Stoffschluss, nämlich den o.g. Mikroformschluss oder Formschluss im Nanobereich zur Verbindungsstelle herstellen. Zur Konsolidierung des faserverstärkten Verstärkungselements wird Wärme und vorteilhafterweise Druck verwendet. Dabei ist bevorzugt vorgesehen, die Wärme über ein externes Gerät beispielsweise Laser oder Infrarotgerät, oder durch Wärmeleitung über den metallenen Achsträger, oder über die Fasern aus Kohlenstoff einzubringen. Das faserverstärkte Kunststoffmaterial bspw. in Form eines Bandes wird weiterhin mit gewisser Kraft gegen die Oberfläche der Verbindungsstelle gepresst, was bei einem Band durch Zug unter geeignetem Winkel gegenüber der besagten Oberfläche erfolgen kann.

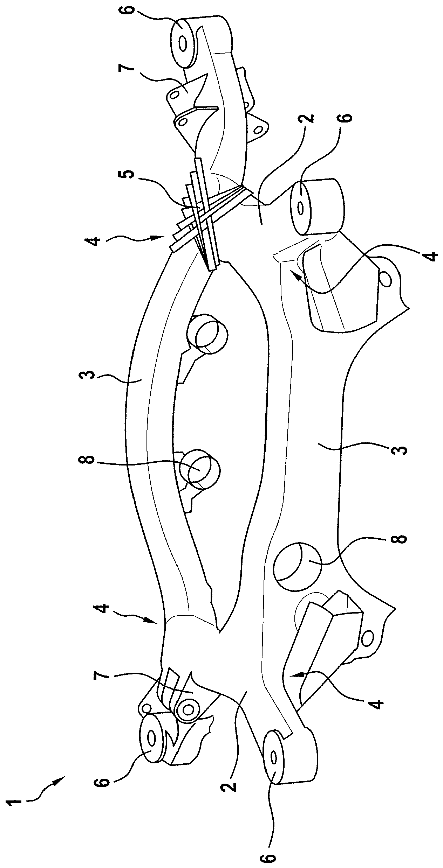

Die beigefügte einzige Figur zeigt einen erfindungsgemäßen Achsträger in einer Prinzipdarstellung, wobei lediglich eine einzige Verbindungsstelle erfindungsgemäß gestaltet ist - in der Realität wird man sämtliche Verbindungsstellen oder zumindest die bezüglich der Mitte des Fahrzeugs symmetrischen Verbindungsstellen mit einem erfindungsgemäßen Verstärkungselement versehen - durch die hier vereinfachte Darstellung sind links und rechts quasi zwei verschiedene Achsträger-Gestaltungen für eine Ausbildung nach den nebengeordneten unabhängigen Ansprüchen 2, 3 gezeigt.

Ein Achsträger 1 eines Kraftfahrzeugs umfasst zwei Längsträger 2 und zwei die Längsträger 2 verbindende Querträger 3. Die Längsträger 2 und die Querträger 3 jeweils an Verbindungsstellen 4 - derer existieren somit vier Stück - miteinander verbunden.

Der Achsträger 1 weist Karosserieanbindungspunkte 6 auf. An diesen Karosserieanbindungspunkten 6 ist der Achsträger 1 mit einer Karosserie des Fahrzeugs verbindbar. Ferner sind insbesondere an den Längsträgern 2 Radanbindungspunkte 7 ausgebildet. An diesen Radanbindungspunkten 7 werden beispielsweise Querlenker oder Längslenker befestigt. Ferner zeigt die Figur an den Querträgern 3 insgesamt drei Lagerstellen 8. An diesen Lagerstellen 8 kann ein Motor oder ein Getriebe am Achsträger 1 befestigt werden.

Wie beispielhaft für nur eine einzige Verbindungsstelle 4 gezeigt ist, ist an der Verbindungstelle 4 ein Verstärkungselement 5 aus faserverstärktem Kunststoff vorgesehen. Das Verstärkungselement 5 ist dabei durch kreuzweises Umwickeln der Verbindungsstelle 4 mit einem faserverstärktem Band geformt. Das Verstärkungselement 5 umfasst neben den Verstärkungsfasern eine im fertigen Zustand ausgehärtete Kunststoff-Matrix, die sowohl die Fasern untereinander verbindet als auch einen Mikroformschluss zur Verbindungsstelle 4 darstellt, soweit das faserverstärkte Kunststoff-Band auf einem metallischen Grundmaterial des Achsträgers 1 aufliegt. (Besteht letztere seinerseits aus einem Kunststoff-Material, so ist selbstverständlich eine stoffschlüssige Verbindung zwischen der Verbindungsstelle 4 des Achsträgers 1 und dem Verstärkungselement 5 möglich). Im gezeigten Beispiel hingegen sind die Längsträger 2 und die Querträger 3 aus Metall gefertigt und untereinander an den Verbindungsstellen 4 verschweißt oder verschraubt. Zur Verstärkung der Verbindungsstellen 4 sind die Verstärkungselemente 5 an den Verbindungsstellen 4 gewickelt.

## Patentansprüche

1. Achsträger (1) eines Kraftfahrzeugs mit zwei metallischen Längsträgern (2) und zumindest einem metallischen Querträger (3), welcher an Verbindungsstellen (4) mit den in ihren Endbereichen Karosserieanbindungspunkte aufweisenden Längsträgern (3) verbunden ist,
**dadurch gekennzeichnet, dass** nur an den Verbindungsstellen (4) und in deren direkter Umgebung jeweils ein Verstärkungselement (5) aus umwickeltem faserverstärktem Kunststoff versehen ist

2. Zwei Kraftfahrzeug-Achsträger (1) mit gleichen geometrischen Abmessungen, die jeweils zwei Längsträger (2) und jeweils zumindest einem Querträger (3), welcher an Verbindungsstellen (4) mit den in ihren Endbereichen Karosserieanbindungspunkte aufweisenden Längsträgern (3) verbunden ist, aufweisen und wobei die Achsträger (1) vorgesehen sind, an hinsichtlich ihres Gewichts und/oder ihrer Antriebsleistung unterschiedlichen Kraftfahrzeug-Typen verbaut zu werden,
**dadurch gekennzeichnet, dass** bei Verwendung in einem Kraftfahrzeug-Typ mit höherem Gewicht und/oder höherer Antriebsleistung zumindest eine Verbindungsstelle (4) mit einem Verstärkungselement (5) aus umwickeltem faserverstärktem Kunststoff versehen ist, welches Verstärkungselement (5) bei einem anderen Kraftfahrzeug-Typ mit geringerem Gewicht und/oder geringerer Antriebsleistung entweder überhaupt nicht oder in geringerer Dimensionierung vorgesehen ist.

3. Verwendung von Kraftfahrzeug-Achsträgern (1) mit jeweils zwei Längsträgern (2) und jeweils zumindest einem Querträger (3), welcher an Verbindungsstellen (4) mit den in ihren Endbereichen Karosserieanbindungspunkte aufweisenden Längsträgern (3) verbunden ist, und wobei die Achsträger (1) vorgesehen sind, mit gleichen geometrischen Abmessungen an hinsichtlich ihres Gewichts und/oder ihrer Antriebsleistung unterschiedlichen Kraftfahrzeug-Typen verbaut zu werden,
**dadurch gekennzeichnet, dass** bei Verwendung in einem Kraftfahrzeug-Typ mit höherem Gewicht und/oder höherer Antriebsleistung zumindest eine Verbindungsstelle (4) mit einem Verstärkungselement (5) aus umwickeltem faserverstärktem Kunststoff versehen ist, welches Verstärkungselement (5) bei einem anderen Kraftfahrzeug-Typ mit geringerem Gewicht und/oder geringerer Antriebsleistung entweder überhaupt nicht oder in geringerer Dimensionierung vorgesehen ist.

4. Achsträger nach einem der Ansprüche 1 und 2, wobei das Verstärkungselement (5) durch thermisches Fügen in der Verbindungsstelle (4) mit dem Grundmaterial des Achsträgers (1) verbunden ist.

5. Achsträger nach Anspruch 4, wobei das Verstärkungselement (5) auch formschlüssig in der Verbindungsstelle (4) mit der Grundstruktur des Achsträgers (1) verbunden ist.

6. Achsträger nach einem der Ansprüche 1, 2, 4 und 5, wobei das Verstärkungselement (5) eine endlose, unidirektionale Faserverstärkung aufweist, die kreuzweise um die Verbindungsstelle (4) gewickelt ist.

7. Achsträger nach einem der Ansprüche 1, 2 und 4 bis 6, wobei das Verstärkungselement (5) aus kohlefaserverstärktem oder glasfaserverstärktem oder aramidfaserverstärktem oder naturfaserverstärktem Kunststoff besteht.

8. Achsträger nach einem der Ansprüche 1, 2, und 4 bis 7, wobei die Längsträger (2) und der zumindest eine Querträger (3) zumindest im Bereich der Verbindungstelle (4) aus einer Leichtmetall-Legierung oder Stahl oder faserverstärktem Kunststoff bestehen.

9. Achsträger nach einem der Ansprüche 1, 2 und 4 bis 8 wobei die Verbindungsstelle (4) ohne Verstärkungselement (5) in Form einer stoffschlüssigen und/oder kraftschlüssigen und/oder formschlüssigen Verbindung ausgebildet ist.

10. Achsträger nach einem der Ansprüche 1, 2 und 4 bis 9, wobei das Verstärkungselement (5) zumindest eine aus einem keine Verstärkungsfasern aufweisenden Material bestehende Zusatzschicht aufweist.

11. Verfahren zur Herstellung eines Achsträgers nach einem der Ansprüche 1, 2 und 4 bis 10, umfassend ein Formen des Verstärkungselementes (5) an der Verbindungsstelle (4) durch Umwickeln der Verbindungsstelle (4) mit einem faserverstärktem Band.

12. Verfahren nach Anspruch 11, **dadurch gekennzeichnet, dass** das Band zusammen mit einer Matrix nassgewickelt wird, oder das Band mit einer Matrix vorimprägniert ist und/oder Hybridgarne umfasst, wobei das Band vor und/oder während und/oder nach dem Wickeln erwärmt wird.

## Claims

1. An axle support (1) of a motor vehicle having two metal longitudinal supports (2) and at least one metal cross-beam (3), which is connected at connection points (4) to the longitudinal supports (3) having body attachment points in their end regions,
**characterised in that** a reinforcement element (5) made of wound fibre-reinforced plastic is provided only at the connection points (4) and in the direct vicinity thereof.

2. Two motor vehicle axle supports (1) having identical geometric dimensions, which each have two longitudinal supports (2) and at least one cross-beam (3), which is connected at connection points (4) to the longitudinal supports (3) having body attachment points in their end regions, and wherein the axle supports (1) are intended to be installed on motor vehicle types that differ in respect of their weight and/or their drive power,
**characterised in that**, in the case of use in a motor vehicle type of higher weight and/or higher drive power, at least one connection point (4) is provided with a reinforcement element (5) made of wound fibre-reinforced plastic, which reinforcement element (5) in another motor vehicle type of lower weight and/or lower drive power either is not provided at all or is provided in a smaller size.

3. Use of motor vehicle axle supports (1) each having two longitudinal supports (2) and at least one cross-beam (3), which is connected at connection points (4) to the longitudinal supports (3) having body attachment points in their end regions, and wherein the axle supports (1) are intended to be installed with identical geometric dimensions on motor vehicle types that are different in respect of their weight and/or their drive power,
**characterised in that**, with use in a motor vehicle type of higher weight and/or higher drive power, at least one connection point (4) is provided with a reinforcement element (5) made of wound fibre-reinforced plastic, which reinforcement element (5) in another motor vehicle type of lower weight and/or lower drive power either is not provided at all or is provided in a smaller size.

4. An axle support according to either one of claims 1 and 2, wherein the reinforcement element (5) is connected to the base material of the axle support (1) by thermal joining in the connection point (4).

5. An axle support according to claim 4, wherein the reinforcement element (5) is also connected to the basic structure of the axle support (1) in a form-fitting manner in the connection point (4).

6. An axle support according to any one of claims 1, 2, 4 and 5, wherein the reinforcement element (5) has an endless, unidirectional fibre reinforcement which is wound in a crossed manner around the connection point (4).

7. An axle support according to any one of claims 1, 2 and 4 to 6, wherein the reinforcement element (5) comprises carbon-fibre-reinforced or glass-fibre-reinforced or aramid-fibre-reinforced or natural-fibre-reinforced plastic.

8. An axle support according to any one of claims 1, 2 and 4 to 7, wherein the longitudinal supports (2) and the at least one cross-beam (3) comprise, at least in the region of the connection point (4), a light metal alloy or steel or fibre-reinforced plastic.

9. An axle support according to any one of claims 1, 2 and 4 to 8, wherein the connection point (4) without reinforcement element (5) is formed in the form of an integrally bonded and/or frictionally engaged and/or form-fitting connection.

10. An axle support according to any one of claims 1, 2 and 4 to 9, wherein the reinforcement element (5) has at least one additional layer comprising a material not comprising any reinforcement fibres.

11. A method for producing an axle support according to any one of claims 1, 2 and 4 to 10, comprising a forming of the reinforcement element (5) at the connection point (4) by winding a fibre-reinforced tape around the connection point (4).

12. A method according to claim 11, **characterised in that** the tape is wound wet together with a matrix, or the tape is pre-impregnated with a matrix and/or comprises hybrid yarns, wherein the tape is heated prior to and/or during and/or after the winding process.

## Revendications

1. Support d'essieu d'un véhicule automobile (1) comportant deux longerons métalliques (2) et au moins une traverse métallique (3) reliée en des zones de jonction (4) aux longerons (3) dont les extrémités sont munies de points de fixation à la carrosserie,
**caractérisé en ce que**
un élément de renforcement (5) en matière plastique renforcée par des fibres, est enroulé et prévu seulement aux zones de jonction (4) et dans leur environnement direct.

2. Deux supports d'essieu d'un véhicule automobile (1) ayant les mêmes dimensions géométriques, composé chacun de deux longerons (2) et d'au moins une traverse (3) reliée aux zones de jonction (4) avec les longerons (3) dont les extrémités sont munies de points de liaison avec la carrosserie, ces supports d'essieu (1) étant prévus pour être montés sur des types de véhicules automobiles qui diffèrent par leur poids/leurs puissance motrice,
**caractérisé en ce que**
pour l'application à un type de véhicule automobile de poids important/ou de puissance motrice importante au moins une zone de jonction (4) est munie d'un enroulement avec un élément de renforcement (5) en matière plastique renforcée par des fibres alors que pour d'autres types de véhicules automobiles moins lourds/ou de puissance motrice moindre, aucun élément de renforcement (5) n'est prévu ou seulement avec un dimensionnement réduit.

3. Application de support d'essieu véhicule automobile (1) ayant deux longerons (2) respectifs et au moins traverse (3) respective dont les zones de jonction (4) avec les longerons (3) comportent des d'extrémités avec des points de fixations de la carrosserie, et
les supports d'essieu (1) ayant des dimensions géométriques identiques pour être installés sur des véhicules automobiles de types différents en tenant compte de leur poids et/ou leur puissance motrice,
application **caractérisée en ce que**
pour un type de véhicule automobile de poids important/ou de forte puissance motrice, au moins une zone de jonction (4) est munie d'un enroulement d'un élément de renforcement (5) en matière plastique renforcée par des fibres, et sur un autre type de véhicule de poids plus faible/ou de moindre puissance motrice, aucun élément de renfoncement (5) n'est prévu ou ne l'est qu'avec un dimensionnement réduit.

4. Support d'essieu, selon l'une des revendications 1 et 2,
dans lequel
l'élément renforcement (5) est relié à la matière de base du support d'essieu (1) par assemblage thermique dans la zone de jonction (4).

5. Support d'essieu, selon la revendication 4,
selon lequel
l'élément de renforcement (5) est également relié par une liaison par la forme à la zone de jonction (4) à la structure de base du support d'essieu (1).

6. Support d'essieu, selon l'une des revendications 1, 2, 4 et 5, l'élément renforcement (5) à un renforcement de fibres unidirectionnelles sans fin, qui sont enroulées de façon croisées autour de la zone de jonction (4).

7. Support d'essieu, selon l'une des revendications 1, 2 et 4 à 6,
selon lequel
l'élément de renforcement (5) est en matière plastique renforcée par des fibres de carbone, des fibres de verre, des fibres aramides ou des fibres naturelles.

8. Support d'essieu, selon l'une des revendications 1, 2 et 4 à 7,
selon lequel
les longerons (2) et au moins une traverse (3) au moins dans la région la zone de jonction (4) sont en alliages de métal léger ou un acier ou une matière plastique renforcée par des fibres.

9. Support d'essieu, selon l'une des revendications 1, 2 et 4 à 8,
selon lequel
la zone de jonction (4) est réalisée sans élément renforcement (5) sous la forme d'une liaison par la matière/ou la force/ou la forme.

10. Support d'essieu, selon l'une des revendications 1, 2 et 4 à 9,
selon lequel
l'élément renforcement (5) comporte au moins une couche supplémentaire d'une matière sans fibres de renforcement.

11. Procédé de fabrication d'un support d'essieu selon l'une des revendications 1, 2 et 4 à 10,
comprenant la mise en forme de l'élément de renforcement (5) aux zones de jonction (4) en enroulant autour de la zone de jonction (4) avec un ruban renforcé par de fibres.

12. Procédé de fabrication, selon la revendication 11,
**caractérisé en ce que**
le ruban est au moins enroulé à l'état humide avec une matrice ou le ruban est pré-imprégné avec une matrice/ou le ruban comporte des fils hybrides, et on chauffe le ruban avant/ou pendant/ou après l'enroulement.
